## Europäisches Patentamt
## European Patent Office
## Office européen des brevets

(11) Veröffentlichungsnummer: **0 248 226**
**A2**

(12) **EUROPÄISCHE PATENTANMELDUNG**

(21) Anmeldenummer: 87106609.8

(22) Anmeldetag: 07.05.87

(51) Int. Cl.³: **G 01 G 21/24**
**G 01 G 3/08, G 01 G 3/16**
**G 01 L 1/10**

(30) Priorität: 06.06.86 DE 3619182

(43) Veröffentlichungstag der Anmeldung:
09.12.87 Patentblatt 87/50

(84) Benannte Vertragsstaaten:
BE DE ES FR GB IT LU NL SE

(71) Anmelder: MAATSCHAPPIJ VAN BERKEL'S PATENT N.V.
P.O. Box 6018 Keileweg 5
NL-3029 BR Rotterdam(NL)

(72) Erfinder: Diebels, Hendrik Pieter
Mauritslaan 5
NL-2264 CT Leidschendam(NL)

(72) Erfinder: Kerpershoek, Gijsbertus Johannes
Jan Stuytstraat 21
NL-3067 EM Rotterdam(NL)

(74) Vertreter: Mentzel, Norbert, Dipl.-Phys. et al,
Patentanwälte Dipl.-Phys. Buse Dipl.-Phys. Mentzel
Dipl.-Ing. Ludewig Unterdörnen 114
D-5600 Wuppertal 2(DE)

(54) Vorrichtung zur Bestimmung von Gewichten einer Last oder von Kräften.

(57) Bei einer Vorrichtung dieser Art wird ein Parallel-Führungskörper verwendet, der außer einem im Meßfall ruhenden Steg auch noch einen beweglichen Steg aufweist, auf den die zu messende Kraft oder das zu messende Gewicht einwirken. Die beiden Stege sind durch ein Paar von im Höhenabstand zueinander angeordneten Blattfedern verbunden. Am einen Steg sitzt ein elastisches Übertragungsorgan, welches zur Untersetzung der wirkenden Kraft nur einen Teil des Gewichts bzw. der Kraft auf ein Meßelement überträgt. Um die Meßgenauigkeit zu erhöhen, wird vorgeschlagen, als Übertragungsorgan einen weiteren Parallel-Führungskörper im Innenraum eines solchen Parallel-Führungskörpers anzuordnen, der seinerseits ein Paar von inneren Blattfedern besitzt, die am Steg des Außenkörpers sitzen und durch einen beweglichen Innensteg miteinander verbunden sind. Dieser Innensteg greift am Meßelement an.

FIG. 1

1

Die Erfindung bezieht sich auf eine Vorrichtung der im
Oberbegriff des Anspruches 1 angegebenen Art. Bei dieser
Vorrichtung (EP=OS 00 16 238) besteht das Übertragungsorgan aus einem biegsamen Balken, dessen freies Ende auf
das Meßelement einwirkt. Das Meßelement ist ortsfest mit dem ruhenden
Steg des Parallel-Führungskörpers verbunden.       Dieser
Biegebalken kann am beweglichen Steg des Parallel-Führungskörpers angeordnet sein und verläuft dann im Innenraum
des Körpers zwischen den beiden Blattfedern, oder er kann
an der einen Blattfeder befestigt sein und dann außerhalb
des Parallel-Führungskörpers liegen. Diese Vorrichtung
wirkt als Kraftteiler und reduziert das Gewicht der auf
den beweglichen Steg einwirkenden zumessenden Last oder
der zu messenden Kraft über den Biegebalken. Dies ist nötig,
weil das Meßelement nur einen Teil des wirkenden Gewichts
bzw. der wirkenden Kraft aufzunehmen in der Lage ist.

Bei der bekannten Vorrichtung ist eine solche Untersetzung
mit dem Nachteil verbunden, daß im Belastungsfall wegen
der Verformung des Biegebalkens die auf das Meßelement
einwirkende Angriffsstelle eine Drehung erfährt, die zu
einer Verfälschung des Meßergebnisses führt. Die effektive
Länge des Biegebalkens wird durch dessen Verformung auch verändert und es treten an der Angriffsstelle unkontrollierbare
Reibungswirkungen ein. Schwierig ist es auch bei der bekannten Vorrichtung eine Vorlast bestimmter Größe auf den
Biegebalken so einwirken zu lassen, daß sich durch eine
eventuelle Schräglage der Vorrichtung keine Vorlastfehler
ergeben. Man läßt zwar eine Vorlast im Schwerpunktbereich
der Vorrichtung angreifen, ist aber, um die Auswirkung von
Erschütterungen zu vermeiden, auf eine starre Verbindung der
Vorlast mit dem Biegekörper angewiesen, was bei Neigungs-

2

lagen der Vorrichtung zu Fehlern in der Meßanzeige führt.

Der Erfindung liegt die Aufgabe zugrunde, eine einfache,
preiswerte Vorrichtung der im Oberbegriff des Anspruches 1
genannten Art zu entwickeln, die sich durch eine größere
Meßgenauigkeit auszeichnet. Dies wird erfindungsgemäß durch
die im Kennzeichen des Anspruches 1 angeführten Maßnahmen
erreicht, denen folgende besondere Bedeutung zukommt:

Die Erfindung besteht aus zwei aneinander gekuppelten
Parallel-Führungskörpern, die zweckmäßigerweise ineinander
geschachtelt sind, so daß der eine Parallel-Führungskörper
außen und der andere im Inneren des vom anderen umschlossenen
Raums angeordnet liegt. Der einfacheren Bezugnahme wegen
sollen daher diese beiden aneinander gekuppelten Parallel-
Führungskörper kurz "Außenkörper" und "Innenkörper" bezeichnet werden. Die im Belastungsfall eintretende Biegung
der beiden Körper ist zueinander entgegengerichtet, denn
der bewegliche Steg des Außenkörpers bildet z.B. den Befestigungs-Steg des Innenkörpers, demgegenüber der im Anspruch erwähnte Innensteg des Innenkörpers beweglich ist.
Konstruktionsmäßig ist daher der bewegliche Innensteg des
Innenkörpers dem ruhenden Steg des Außenkörpers nebengeordnet und wirkt dort auf das Meßelement ein. Durch diese
Ineinanderschachtelung wird zwar im Belastungsfall der
Außenkörper einen Versatz der Angriffsstelle am Meßelement
in der einen Richtung veranlassen, doch durch die entgegengerichtete Verformung des Innenkörpers ergibt sich ein
dazu gegensätzlicher Versatz der Angriffsstelle, der kompensierend wirkt. Durch diese Kompensation, die durch eine
abgestimmte Dimensionierung der Blattfedern im Außen- und
Innenkörper optimiert werden kann, ergibt sich keine
Drehung der Angriffsstelle; das Meßelement wird über den ganzen Meßbereich hinweg stets gleichbleibend vertikal belastet. Obwohl durch die Verformungen der beiden Körper jeweils eine Verkürzung der effektiven Länge eintritt, ergibt sich bei der erfindungsgemäßen Kombination der beiden Körper zu einem Doppel-Parallel-Führungskörper am Meßelement keine Längenänderung. Die Änderung der effektiven Länge beim Innenkörper ist nämlich derjenigen des Außenkörpers entgegengerichtet und hebt diese wieder auf. Sehr vorteilhaft können im Bereich des Innenkörpers Vorlasten angreifen, die nicht mehr zu Meßfehlern infolge einer Schräglage der Vorrichtung führen. Dazu kann der Freiraum des Innenkörpers gemäß Anspruch 11 genutzt werden, wo eine solche Vorlast bereits durch eine Verbreiterung des Innenstegs erzielbar ist. Diese Verbreiterung kann aber ihrerseits als Angriffsstelle für eine weitere Vorlastmasse gemäß Anspruch 12 herangezogen werden.

Obwohl eine spiegelbildliche Anordnung der beiden ineinander geschachtelten Körper möglich wäre, was dann auch hinsichtlich der Anordnung des Meßelements verwirklicht ist, empfiehlt sich die Anordnung nach Anspruch 2. Die einstückige Ausbildung der beiden Körper gemäß Anspruch 3 sichert gleiches Material und dadurch gleiches Dehnungsverhalten der beiden Körper. Solche Einstückigkeit des erfindungsgemäßen Doppelkörpers ist auch günstig für die Fertigung, weil Montage- und Justierarbeiten eingespart sind. Außerdem werden bei der Erfindung dann auch Hysteresis-Fehler kompensiert. Zugleich sind damit Übergangsfehler an den Kupplungsstellen der einzelnen Bestandteile der beiden Körper vermieden.

4

Als Meßelement kann man jeden an sich bekannten Kraftmesser nutzen, z.B. einen Quarz. Sofern man aber, gemäß Anspruch 4, eine schwingende Saite verwendet, kann man durch eine gezielte Neigungslage eventuelle im Belastungsfall auftretende Meßfehler kompensieren.

Obwohl der Innenkörper zweckmäßigerweise im Innenraum des Außenkörpers aus Platzgründen angeordnet sein sollte, ist es nicht erforderlich, auch das Meßelement mit in den Innenraum des Außenkörpers anzuordnen. Man kann nämlich mit einem verlängerten Arm am ruhenden Steg des Außenkörpers einen der nach den Ansprüchen 6 bis 9 vorbeigehen. Ein kürzerer derartiger Arm, der eine Anordnung des Meßelements noch im Innenraum des Außenkörpers nach Anspruch 5 gestattet, ist für die Kraftverteilung und für die Anordnung weiterer Bauteile vorteilhaft Ein solcher Arm kann dabei auch eine Kompensationswirkung hinsichtlich Temperaturfehlern ausführen, wenn man die Maßnahmen nach Anspruch 10 dabei anwendet. Temperaturfehler können sich auch durch temperaturbedingte Dimensionsänderungen am Meßelement ergeben, weshalb die Maßnahmen nach Anspruch 13 sehr vorteilhaft sind, die auch solche Fehler eliminieren.

Sofern die auf die erfindungsgemäße Vorrichtung wirkende Last nicht im mittleren Bereich der Lastschale angreift, sondern demgegenüber extrem in den Randbereich der Lastschale versetzt aufgelegt wird, lassen sich die dabei eintretenden Ecklast-Probleme durch die Maßnahmen nach Anspruch 15, 16 oder 17 beseitigen. Es können auch die Maßnahmen des Anspruches 15 und 17 gleichzeitig angewendet werden. Die Maßnahme des Anspruches 15 läßt sich einfach dadurch verwirklichen, daß man die eine Blattfeder des Außenkörpers im Bereich des ruhenden Stegs mit einer Ausnehmung versieht.

Um Erschütterungen vom Meßelement fernzuhalten, wird man ein mechanisches Dämpfungsglied nach Anspruch 18 vorsehen. Die beiden Bestandteile des Dämpfungsglieds, wie ein Zylinder und ein Kolben, sind dabei zwischen dem Innen- und Außenkörper angeordnet. Aus Platzersparungsgründen kann das Dämpfungsglied auch in dem einen Steg gemäß Anspruch 19 angeordnet sein. Ein weiteres, die Erschütterungen aufnehmendes Dämpfungsglied sollte man dabei vorteilhaft nach Anspruch 20 anordnen.

Bei der Anwendung der erfindungsgemäßen Vorrichtung auf Waagen ist es erforderlich, Typen für unterschiedliche Meßbereiche zu entwickeln. Trotz dieser Vielfalt läßt sich eine einheitliche Fertigung durchführen, wenn man die Maßnahmen des Anspruches 14 dabei beachtet. Der Innenkörper kann dabei in jedem Fall gleich gestaltet sein. Es ist aber auch möglich, den Außenkörper mit an sich gleichen Dimensionen auszubilden, weil durch unterschiedliche Breiten oder Dicken der dabei verwendeten Blattfedern die gewünschten Untersetzungsverhältnisse für verschiedene Wägebereiche erzielbar sind.

In den Zeichnungen ist die Erfindung in mehreren Ausführungsbeispielen dargestellt. Es zeigen:

Fig. 1 schematisch die Ansicht auf den maßgeblichen Teil der erfindungsgemäßen Vorrichtung, woraus das Bauprinzip erkennbar ist,

Fig. 2 eine geschnittene Seitenansicht des entscheidenden Teils der Vorrichtung von Fig. 1 längs der dortigen Schnittlinie II-II,

Fig. 3 bis 6 eine alternative Ausführung des maßgeblichen Bauteils von Fig. 1 in Seitenansicht,
Draufsicht und in Schnittansichten längs der
Schnittlinien V-V bzw. VI-VI von Fig. 3,

Fig. 7 eine perspektivische Ansicht des Bauteils von

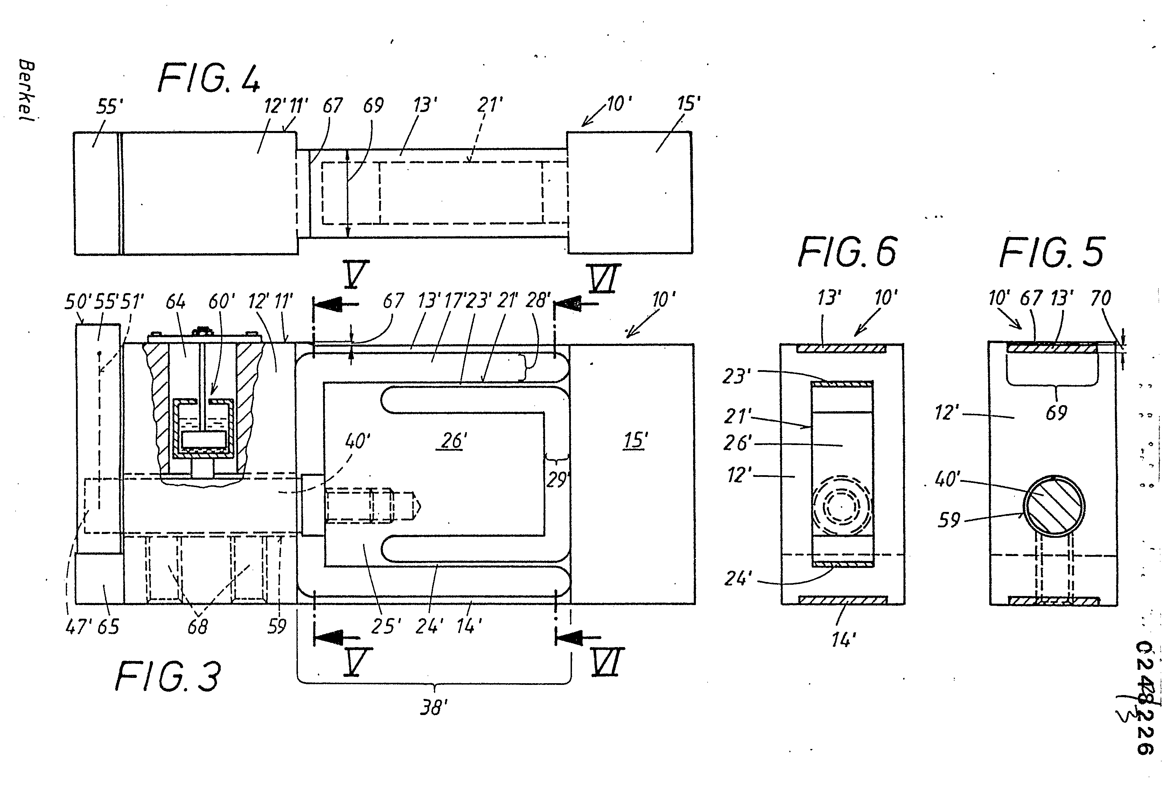

Fig. 3 und

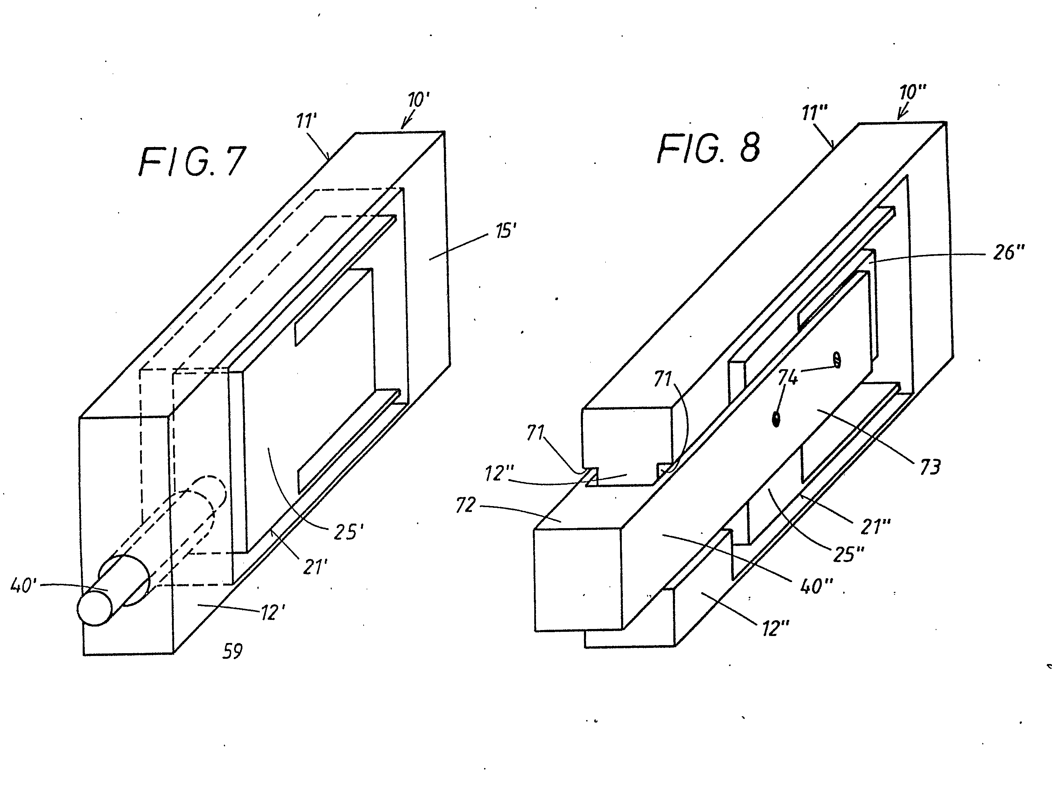

Fig. 8 eine perspektivische Ansicht einer Alternative
von Fig. 7.

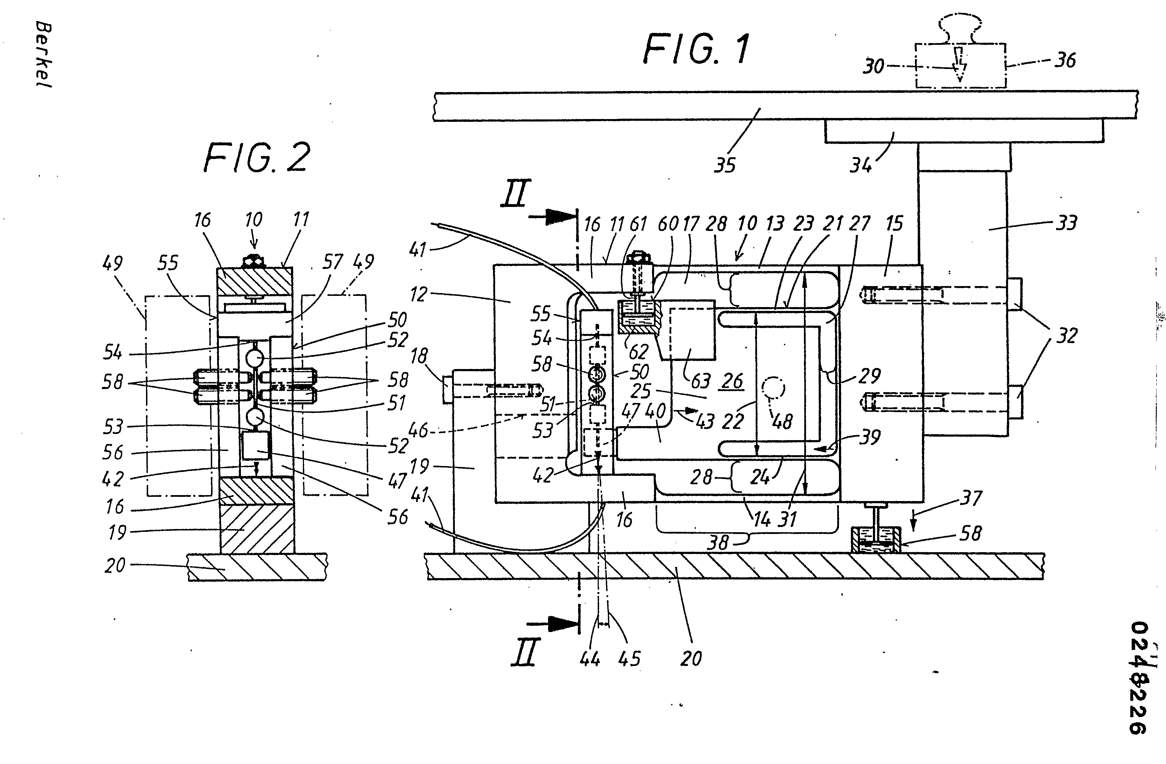

Die in Fig. 1 gezeigte erfindungsgemäße Waage umfaßt einen
besonderen, als "Doppelkörper" 10 zu bezeichnenden Bauteil,
der aus zwei ineinander geschachtelten Parallel-Führungskörpern 11, 21 besteht, die jeweils in sich rahmenartig
gestaltet sind. Der äußere Parallel-Führungskörper 11, der
nachfolgend kurz "Außenkörper" bezeichnet werden soll,
umfaßt einen ruhenden Steg 12, der hier wegen seitlicher
Ansätze 16 eine C-Form aufweist und über eine Schraubbefestigung 18 od. dgl. auf einem hier L-förmigen Lagerblock 19 ruht. Der Lagerblock 19 ist seinerseits mit einer
Standbasis 20 der Waage verbunden, die beispielsweise
aus einer Bodenplatte des Gehäuses gebildet ist. Die Standbasis 20 sollte horizontal verlaufen, also in einer Potentialebene der Schwerkraft angeordnet sein. Dadurch verläuft
der ruhende Steg 12 etwa in Schwerkraftrichtung, senkrecht
zur Standbasis 20, was durch den Kraftpfeil 30 in Fig. 1
verdeutlicht ist.

Zum Außenkörper 11 gehört ein Paar von Blattfedern 13,14,
die in einem Höhenabstand 31 zueinander angeordnet sind,
wenn man in Schwerkraftrichtung blickt. An dem bezüglich
des ruhenden Stegs 12 gegenüberliegenden Ende der Blattfedern 13, 14 verläuft ein weiterer Steg 15, der nachfolgend
als "beweglicher Steg" bezeichnet werden soll. An dem Steg 15.

ist durch Schrauben 32 od. dgl. ein Träger 33 befestigt, der über eine Stützplatte 34 mit einer Lastschale 35 verbunden ist. Die Lastschale 35 nimmt im Gebrauchsfall der Waage die strichpunktiert angedeutete, gewichtsmäßig zu bestimmende Last 36 auf und überträgt ihr Gewicht, im Sinne des bereits erwähnten Kraftpfeils 30 auf den Steg 15. Durch das auf den Steg 15 wirkende Gewicht 30 werden die beiden Blattfedern 13, 14 abwärts gebogen, wobei es zu einer S-förmigen Verformung der Blattfedern 13, 14 kommt und sich eine nach unten gerichtete Bewegung 37 des beweglichen Stegs 15 ergibt. Durch die S-Form der Blattfedern 13, 14 kommt es aber zugleich zu einer effektiven Verkürzung der in Fig. 1 angedeuteten Länge 38 der beiden Blattfedern 13, 14, wodurch der Steg 15 in Fig. 1 sich zugleich um ein gewisses Maß nach links im Sinne des Pfeils 39 nach innen in Richtung auf den ruhenden Steg 12 bewegt. Aufgrund der Dimensionierung seiner Blattfedern 13, 14 unterliegt der Außenkörper 11 einer bestimmten Federkonstanten $c_0$.

Wie bereits erwähnt wurde, ist der Innenkörper 11 mit einem weiteren Parallel-Führungskörper 21 gekoppelt, der hier im Innenraum 17 des Außenkörpers 11 platzsparend angeordnet ist. Dieser Körper soll daher nachfolgend kurz "Innenkörper 21" bezeichnet werden. Dieser Innenkörper 21 weist einen analogen rahmenförmigen Aufbau auf, wobei sein einer äußerer Rahmenteil von dem bereits erwähnten beweglichen Steg 15 des Außenkörpers 11 gebildet ist. Der Außenkörper 11 ist im übrigen mit seinen Bestandteilen 12, 13, 14 und 15 einstückig hergestellt. Zweckmäßigerweise ist auch der Innenkörper 21 seinerseits einstückig und baueinheitlich mit dem Außenkörper 11 erzeugt. Im dargestellten bevorzugten Ausführungsbeispiel ist folglich der

~~14~~ 8

ganze Doppelkörper 10 nach der Erfindung einstückig
aus gleichem Material hergestellt.

Zum Innenkörper 21 gehören ferner ein Paar von Blattfedern 23, 24, die wiederum in Wirkungsrichtung der Schwerkraft 30 in einem Höhenabstand 22 zueinander angeordnet
sind. Die Blattfedern 23, 24 befinden sich in einem freien
Abstand 28 von den benachbarten Blattfedern 13, 14 des
Außenkörpers 11 und sind an ihren vom beweglichen Steg 15
abgekehrten Enden durch einen Innensteg 25 miteinander
verbunden. Dieser Innensteg 25 ist zweckmäßigerweise, wie
Fig. 1 verdeutlicht, mit einer Verbreiterung 26 versehen,
die in den inneren Freiraum 27 des rahmenförmigen Innenkörpers 21 hineinragt und dort in einem allseitigen Abstand 29 von den angrenzenden Blattfedern 23, 24 und dem
beweglichen Steg 15 angeordnet ist. Der Innensteg 25 ist
schließlich mit einem Arm 40 versehen, der annähernd in
Verlaufsrichtung dieser inneren Blattfedern 23, 24 sich
erstreckt und bis in den Bereich der starr mit dem ruhenden
Steg 12 verbundenen Ansätze 16 hineinragt. Am freien Ende
des Arms 40 greift ein Meßelement 50 an, das zur Bestimmung
des zu messenden Gewichts 30 dienen soll. Sein hier gewählter
spezieller Aufbau ist aus Fig. 2 zu entnehmen.

Obwohl als Meßelement 50 jeder an sich bekannte Kraftaufnehmer verwendet werden könnte, ist im vorliegenden Fall
hierfür ein Saiteninstrument verwendet, das ausweislich
der Fig. 2 grundsätzlich folgenden Aufbau hat. Das Saiteninstrument 50 ist im Bereich zwischen den festen Ansätzen
16 des ruhenden Stegs 12 in diesem Ausführungsbeispiel
angeordnet. Die eigentliche Meßsaite 51, die für eine
definierte Lage der Saitenschwingungen mit Beschwerungskörpern 52 ausgerüstet sein kann, bildet mit ihrem einen Saitenende die Angriffsstelle 53 des erwähnten Arms 40.
Das andere Saitenende ist über ein besonders geformtes
und aus anderem Material bestehendes Joch 55 an dem unteren
starren Ansatz 16 des ruhenden Stegs 12 befestigt und
bildet somit eine Stützstelle 54 des Meßelements 50.
Das Joch 55 besteht aus zwei parallelen Jochschenkeln 56,
die mit ihren freien Enden sich am Ansatz 16 abstützen
und anderendig durch ein Scheitelstück 57 miteinander
fest verbunden sind. Das Scheitelstück 57 dient zum Einspannen des als Stützstelle 54 bezeichneten Endes der
Meßsaite 51, während das andere, als Angriffsstelle 53
bezeichnete Ende der Meßsaite 51 am Arm 40 befestigt ist.
In das Scheitelstück 57 und den Arm 40 sind die aus Fig. 1
ersichtlichen elektrischen Leitungen 41 isolierend angebracht, welche im Betriebsfall einen Strom durch die Meßsaite 51 senden. Dieses Joch 55 dient zugleich zur Anordnung von Permanentmagneten 58, die in den Jochschenkeln 56
aufgenommen sind und im Betriebsfall die Meßsaite 51 in
Eigenschwingungen versetzen, wenn diese über die elektrischen
Leitungen 41 von einem elektrischen Strom durchflossen wird.
Dies wird von einem nicht näher gezeigten Auswertegerät
festgestellt, das an den Leitungen 41 angeschlossen ist und
das gemessene Signal in einen Gewichtswert umrechnet und
anzeigt.

Im Falle einer Last 36 kommt es auch im Bereich des Innenkörpers 21 zu einer Deformation aufgrund des bereits erwähnten wirksamen Gewichts 30. Weil der Arm 40 über die
Meßsaite 51 festgehalten wird, kommt es zu einer S-förmigen
Deformation der beiden Blattfedern 23, 24, aufgrund der
erwähnten Abwärtsbewegung 37 des beweglichen Stegs 15. Das
Elastizitätsverhalten des Innenkörpers 21 läßt sich durch

eine Federkonstante $c_1$ wiedergeben. Diese Federkonstante $c_1$ des Innenkörpers 21 wirkt mit der bereits oben erwähnten Federkonstante $c_0$ des Außenkörpers 11 kraftreduzierend zusammen, weshalb das tatsächliche Gewicht 30 der wirkenden Last 36 nur mit einem bestimmten, in Fig. 1 und 2 durch den Kraftpfeil 42 angedeuteten Teilgewicht auf die Meßsaite 51 einwirkt. Auf diese Weise ist ein Reduzierprinzip für das zu messende Gewicht 30 bei der erfindungsgemäßen Waage erzeugt.

Bei dieser Deformation des Innenkörpers 21 kommt es zu einer ähnlichen Verkürzung der effektiven Länge der Blattfedern 23, 24, wie sie vorstehend anhand des Innenbewegungs-Pfeils 39 am Steg 15 für den Außenkörper 11 erläutert worden ist. Doch ist diese effektive Längenverkürzung des Innenkörpers 21, wenn man den dortigen Innensteg 25 betrachtet, jener des Außenkörpers 11 entgegengerichtet. Im Belastungsfall bewegt sich nämlich der Innensteg 25 vom ruhenden Steg 12 weg im Sinne des in Fig. 1 eingezeichneten nach außen gerichteten Bewegungspfeils 43. Wie ersichtlich, sind die im Belastungsfall auftretenden beiden Bewegungen 39, 43 einander entgegengerichtet und heben sich im Idealfall gegenseitig auf. Dies läßt sich durch eine abgestimmte Dimensionierung der Längen und Federeigenschaften der beiden Körper 11, 21 erreichen. Die sonst in einem solchen Fall auftretenden Fehler werden bei der Erfindung folglich kompensiert.

Durch die doppelten Parallel-Führungskörper 11, 21 wird schon für eine weitgehende Parallelbewegung des Innenstegs 25 im Belastungsfall gesorgt. Sofern sich eine restliche Drehung des Innenstegs 25 ergeben sollte, empfiehlt es sich, die Meßsaite 51 nicht genau in der in Fig. 1 strichpunktiert angedeuteten Vertikallinie 44 zur Standbasis 20 anzuordnen, sondern mit einer leichten Neigung, die in Fig. 1 durch die weitaus übertrieben eingezeichnete Neigungslinie 45 veranschaulicht worden ist. Dies erlangt man einfach durch einen entsprechenden Versatz der Angriffsstelle 53 vom Arm 40 bezüglich der im Joch verankerten gegenüberliegenden Stützstelle 54 der Meßsaite 51. Diese Neigung 45 kompensiert eine im Belastungsfall eintretende Verdrehung des Innenstegs 25 gegenüber der gewünschten parallelen Lage. Eine in Fig. 1 gestrichelt angedeutete Montageöffnung 46 im ruhenden Steg 12 ermöglicht die Handhabung und Justierung im Bereich der Angriffsstelle 43 der Meßsaite 51 am Arm 40. Der Arm 40 begünstigt auch die Parallel-Führung der Meßsaite 51 im Belastungsfall, hat aber auch noch folgende weiteren Funktionen zu erfüllen.

Der Arm 40 als ganzes oder zumindest ein Teilstück 47, wie sein Endstück, sollten aus einem gegenüber dem Innenkörper 21 anderen Werkstoff bestehen, der einen Temperatur-Aus-dehnungskoeffizienten aufweist, der kompensierend hinsicht-lich jener Längenänderungen wirksam ist, die sich durch temperaturbedingte Ausdehnungen des Innenkörpers 21 und des Außenkörpers 11 ergeben. Änderungen der Dimension des erfindungsgemäßen Doppelkörpers 10 durch Temperatureinwirkung verfälschen dadurch das Meßergebnis nicht.

Eine weitere Funktion des Arms 40 besteht darin, im Ausführungsbeispiel gemäß Fig. 1 und 2, das Meßelement 50 mit in den Innenraum 17 anzuordnen. Um auch hier temperaturbedingte Dimensionsänderungen des Meßelements 50 zu kompensieren, bildet man das zur Abstützung des eigentlichen Meßteils, nämlich hier der Meßsaite 51, dienende Bauelement, nämlich das Joch 55, aus einem Werkstoff aus, der einen dazu abgestimmten Temperatur-Ausdehnungskoeffizienten besitzt. Wird beispielsweise durch Temperaturerhöhung eine Längenänderung der Meßsaite 51 herbeigeführt, so verlängert sich das Joch 55 in Verlaufsrichtung dieser Meßsaite 51, also im Bereich der Jochschenkel 56, in entsprechendem Maße. Dadurch tritt auch hier kein Temperaturfehler ein.

Eine letzte Funktion des Arms 40 besteht schließlich im Ausführungsbeispiel von Fig. 1 darin, um raumsparend im Innenraum 17 des Außenkörpers 11 schließlich auch ein Dämpfungsglied 60 anzuordnen, das zwischen dem Innenkörper 21 und dem Außenkörper 11 angeordnet ist und beispielsweise, wie angedeutet, aus einem Kolbenteil 61 und einem Zylinderteil 62 besteht. Der eine Teil, z.B. der Kolben 61, ist an dem starr mit dem ruhenden Steg 12 verbundenen Ansatz 16 befestigt, während der die Dämpfungsflüssigkeit aufnehmende Zylinder 62 über Laschen 63 od. dgl. mit dem Innensteg 25 des Innenkörpers 21 verbunden ist. Durch diesen Dämpfer 60 werden Bodenerschütterungen aufgenommen und eine schnell ablaufende Ausschwingung erreicht, die zu einem schnellen Resultat des ermittelten Gewichts führt. Schließlich schützt der Dämpfer 60 die Meßsaite 51 auch gegen Bruch bei extremen Erschütterungen.

Abgesehen von solchen temperatur-kompensierenden Zusatzwerkstoffen im Bereich des Arms 40 ist der Doppelkörper 10, wie bereits oben erwähnt wurde, zweckmäßigerweise einstückig mit einem Innen- und Außenkörper 11, 21 hergestellt.

Diese Werkstoffgleichheit in beiden Körpern 11, 21 führt
auch schon zu einer wechselseitigen Kompensation der
Ausdehnungen infolge Temperaturänderung. Durch die Temperatur kommt es nämlich beim Außenkörper 11 zu einer Längenänderung, die derjenigen des Innenkörpers 21, bezogen auf
das Meßelement, entgegengerichtet ist. Durch solche Einstückigkeit werden auch Montagearbeiten vermieden und insbesondere ein Hysteresis-Fehler des Außenkörpers 11 bezüglich demjenigen des Innenkörpers 21 ebenfalls kompensiert.

Die erfindungsgemäße Waage ist schließlich, wie Fig. 1
zeigt, noch mit einem weiteren Dämpfungsglied 58 versehen,
das zwischen dem beweglichen Steg 15 des Außenkörpers 11
und der Standbasis 20 angeordnet ist und zu einer schnellen
Beruhigung des Systems infolge von Erschütterungen führt,
die entweder vom Untergrund her oder von der aufgelegten
Last 36 erzeugt werden.

Die erfindungsgemäße Waage läßt schließlich auch die problemlose Anordnung einer größeren Vorlast zu, die zusätzlich zu der bereits      durch die erwähnte Verbreiterung
26 hervorgerufenen Wirkung hinzukommen kann. Im Schwerpunktbereich des Systems, der durch die strichpunktiert in Fig. 1
angedeutete Bohrung 48 kenntlich gemacht ist, lassen sich
nämlich weitere, in Fig. 2 strichpunktiert angedeutete
Vorlast-Massen 49 anbringen. Diese Vorlastmassen 49 können
beidseitig des Doppelkörpers 10 angeordnet sein, wofür ein
Bolzen geeignet ist, der durch die erwähnte Bohrung 48
hindurchgeführt ist und die beiden Massen 49 mit dem Innenkörper 21 verbindet.

In den Fig. 3 bis 7 ist ein alternativer Doppelkörper 10' gezeigt, der einen im wesentlichen gleichen Aufbau hat, weshalb zur Bezeichnung entsprechender Bauteile die gleichen Bezugszeichen wie im ersten Ausführungsbeispiel von Fig. 1 und 2 verwendet werden, zur Unterscheidung davon aber mit eine Strich (') versehen sind. Soweit nichts Besonderes gesagt ist, gilt auch für diesen Doppelkörper 10' die vorausgehende Beschreibung.

Ein Unterschied besteht zunächst darin, daß der dortige Innenkörper 21', wie aus Fig. 3 hervorgeht, bis auf einen allseitigen freien Abstand 28' nahezu den ganzen Innenraum 17' des dortigen Außenkörpers 11' ausfüllt. Der Arm 40' ist aber verlängert und durchgreift einen Durchbruch 59 in einem unter Umständen breiter gestalteten ruhenden Steg 12' des Außenkörpers 11'. An diesem Arm 40' greift auch das Dämpfungsglied 60' an, das in einer Aussparung 64 des hier verbreiterten Stegs 12' raumsparend untergebracht ist. Das Endstück 47 ragt auf der Außenseite des Stegs 12' heraus, woran das Meßelement 50', nämlich ebenfalls eine Meßsaite 51', einendig angeschlossen ist. Das andere Ende dieses Meßelements 50' stützt sich wiederum an einem Joch 55'ab, das auf einem Absatz 65 an der Außenseite des ruhenden Stegs 12' montiert ist.

Auch hier sind die beiden Körper 11', 21' einstückig aus gleichem Werkstoff erzeugt, lediglich der verlängerte Arm 40' ist gesondert hergestellt und über einen endseitigen Bolzen od. dgl. in einer Bohrung des dortigen Innenstegs 25' montiert. Es bietet sich hier die oben erwähnte Anwendung eines die Ausdehnung des Doppelkörpers 10' infolge Temperaturänderung kompensierenden Werkstoffs

15

im ganzen getrennt hergestellten Arm 40' an. Die beiden äußeren Blattfedern 13', 14' sind aber hier unmittelbar am ruhenden Steg 12' angeformt und besitzen in diesem Ausführungsbeispiel keinen absolut parallelen Verlauf zueinander. Alternativ oder zusätzlich könnten auch die beiden Stege 12', 15' des Außenkörpers 11' von vorneherein einen gewissen Neigungsverlauf zueinander aufweisen, indem beispielsweise die untere Blattfeder 14' eine größere Blattlänge 38' als die obere Blattfeder 13' aufweist. Letzteres ist in den Zeichnungen nicht näher dargestellt. Diese Maßnahmen sollen sogenannten "Ecklast-Fehlern" entgegenwirken, die sich dann ergeben, wenn die Last 36 nicht im Zentralbereich der Lastschale 35, sondern an den Lastschalen-Rand versetzt aufgelegt wird. Dem trägt der Doppelkörper 10' dadurch Rechnung, daß die obere Blattfeder 13' um eine kleine Stufe 67 höhenmäßig versetzt ist und daher die beiden Blattfedern 13', 14' geneigt zueinander verlaufen. Diese Höhenstufe 67 kann auch durch eine einseitige Ausformung der oberen Blattfeder 13' an ihrer Ansatzstelle am ruhenden Steg 12' erfolgen.

Die Verwendung des verlängerten Arms 40' hat den Vorteil einer vereinfachten Montage und Justierung des Meßelements 50', weil dieses auf der Außenseite des Doppelkörpers 10' bequem zugänglich ist. Es wird dabei auch ein ausreichender Platz für das Dämpfungsglied 60' gewährleistet. Bohrungen 68 für die Befestigung des Doppelkörpers 10' sind in diesem Ausführungsbeispiel auf der Unterseite des ruhenden Stegs 12' vorgesehen. Auch hier kann der Innensteg 25 mit einer Verbreiterung 26' versehen sein.

In der Praxis sind Waagen für verschiedene Wiegebereiche erforderlich. Vorteilhaft ist es dabei, für alle Typen einen gleichgestalteten Innenkörper 21' zu verwenden und lediglich den Außenkörper 11' typenweise unterschiedlich zu dimensionieren. Am einfachsten geschieht dies, indem man die Federbreite 69 und/oder die Federdicke 70 der beiden äußeren Blattfedern 13', 14' typenweise unterschiedlich gestaltet. Man kann dann von einem einheitlichen Grundkörper 10' ausgehen, bei dem nachträglich die Federbreite 69 schmaler und gegebenenfalls dünner ausgebildet werden kann, wenn es darauf ankommt, die Waage für einen unteren Wiegebereich zu erstellen.

Normalerweise wird man die erfindungsgemäßen Doppelkörper 10, 10' aus einem metallischen Block über einen Fräsvorgang erstellen, indem man die freien Abstände 28, 29 bzw. 28', 29' darin erstellt. Preiswerter und einfacher ist es aber, die Doppelkörper 10, 10' in einem Gußverfahren herzustellen. Hierzu kann man alle gießfähigen Werkstoffe verwenden, die in festem Zustand elastische Eigenschaften aufweisen. Man kann hierfür z.B. Metall-Spritzguß verwenden, aber auch die Anwendung von Kunststoffen ist möglich.

Im Rahmen der Erfindung ist es möglich, die Doppelkörper 10, 10' in spiegelbildlicher Anordnung in einer Waage zu verwenden, wo man die Stege 15, 15' festsetzt und eine Bewegung der Stege 12, 12' erzeugt. Dabei nehmen natürlich die Meßelemente 50, 50' eine dazu passende Lage ein. Es wäre schließlich auch möglich, den Innenkörper 21 oberhalb oder unterhalb des Außenkörpers 11' zu positionieren, wodurch der Innenraum 17, 17' für andere Bauteile genutzt werden kann.

In der Vorrichtung kann neben dem Doppelkörper 10, 10'
und seinem Meßelement 50, 50' eine für die Gewichtsbestimmung nützliche Vergleichsschwingung von einem Referenzglied erzeugt werden, z.B. von einem Quarz, was nicht
näher gezeigt ist. Im Auswertegerät wird das vom Meßelement
kommende Meßsignal zusammen mit dem Vergleichssignal
des Referenzglieds ausgewertet.

Die Fig. 7 zeigt eine perspektivische Ansicht des in den
Fig. 3 bis 6 erläuterten Doppelkörpers 10'. Fig. 8 dagegen
zeigt eine Alternative dazu anhand eines Doppelkörpers
10''. Soweit ein übereinstimmender Aufbau vorliegt, werden
zur Bezeichnung entsprechender Bauteile die gleichen Bezugszeichen wie im zweiten Ausführungsbeispiel von Fig. 3 bis
7 verwendet, jedoch zur Unterscheidung davon mit einem
Doppelstrich ('') versehen. Soweit nichts Besonderes gesagt ist, gilt die vorausgehende Beschreibung des Doppelkörpers 10'.

Ein Unterschied besteht darin, daß die verlängerten Arme
40'' aus zwei parallelen Laschen 73 bestehen, die an ihrem
freien Ende durch ein Scheitelstück 72 miteinander verbunden sind. Die Laschen 73 sind durch Schrauben 74 od. dgl.
mit dem dortigen Innensteg 25'' bzw. der dortigen Verbreiterung 26'' verbunden und gehen seitlich an dem ruhenden
Steg 12'' des dortigen Außenkörpers 11'' vorbei. Wie aus

Fig. 8 ersichtlich, ist zu diesem Zweck der dortige ruhende Steg 12'' mit Ausnehmungen 71 ausgerüstet, in welchen, mit seitlichem Spiel, die beiden Laschen 73 des dortigen Arms 40'' aufgenommen sind. Das Scheitelstück 72 des Arms 40'' befindet sich dann außerhalb des Außenkörpers 11'' und dient dort zum Anschluß eines nicht näher gezeigten Meßelements.

zugelassene Vertreter beim Europäischen Patentamt   **0248226**

# DIPL.-PHYS. BUSE · DIPL.-PHYS. MENTZEL · DIPL.-ING. LUDEWIG
Unterdörnen 114 · Postfach 200210 · 5600 Wuppertal 2 · Telefon (0202) 55 70 22/23/24 · Telex 8591606 wpat · Telefax 0202/557024

56

5600 Wuppertal 2, den

Kennwort: "FRAISE, Fall 311"

Bezugszeichenliste:

| | |
|---|---|
| 10, 10', 10'' | Doppelkörper |
| 11, 11', 11'' | äußerer Parallel-Führungskörper, Außenkörper |
| 12, 12', 12'' | ruhender Steg |
| 13, 13' | obere Blattfeder |
| 14, 14' | untere Blattfeder |
| 15, 15' | beweglicher Steg |
| 16 | Ansatz |
| 17, 17' | Innenraum von 11, 11' |
| 18 | Schraubbefestigung von 11 |
| 19 | Lagerbock für 11 |
| 20 | Standbasis |
| 21, 21' | innerer Parallel-Führungskörper, Innenkörper |
| 22 | Höhenabstand von 23, 24 |
| 23, 23' | obere Blattfeder |
| 24, 24' | untere Blattfeder |
| 25, 25', 25'' | Innensteg |
| 26, 26', 26'' | Verbreiterung von 25 |
| 27 | Freiraum |
| 28, 28' | freier Abstand |
| 29, 29' | Abstand |
| 30 | Schwerkraft - Pfeil, Gewicht |
| 31 | Höhenabstand von 13, 14 |
| 32 | Schraube |
| 33 | Träger |
| 34 | Stütze |
| 35 | Lastschale |
| 36 | Last |

0248226

186

37    Abwärtsbewegungs-Pfeil von 15

38, 38'Länge von 13, 14

39    Innenbewegungs-Pfeil

40, 40',40''Arm

41    elektrische Leitung

42    Teilgewicht-Pfeil bei 51

43    Außenbewegungs-Pfeil

44    Vertikallinie

45    Neigungslinie

46    Montageöffnung

47, 47'Armstück, Armende

48    Bohrung

49    Vorlastmasse

50, 50'Meßelement, Saiten-Instrument

51, 51'Meßsaite

52    Beschwerungskörper

53    Angriffsstelle

54    Stützstelle

55, 55'Joch

56    Jochschenkel

57    Scheitelstück von 55

58    Dämpfungsglied

59    Durchbruch in 12'

60, 60'Dämpfungsglied

61    Kolbenteil von 60

62    Zylinderteil von 60

63    Lasche

64    Aussparung in 12'

65    Absatz von 12'

66    Bohrungen

67    Höhenstufe

68    Bohrung

69    Federbreite

70    Federdicke

71 Ausnehmung in 12''

72 Scheitelstück

73 Lasche von 40''

74 Schrauben

zugelassene Vertreter beim Europäischen Patentamt   0248226

# DIPL.-PHYS. BUSE · DIPL.-PHYS. MENTZEL · DIPL.-ING. LUDEWIG

Unterdörnen 114 · Postfach 200210 · 5600 Wuppertal 2 · Telefon (0202) 5570 22/23/24 · Telex 8591606 wpat · Telefax 0202/557024

5600 Wuppertal 2, den 04.06.1986

56

Kennwort: "FRAISE, Fall 311"

Maatschappij van Berkel's Patent N.V.,
Rotterdam/Niederlande

_____

Vorrichtung zur Bestimmung von Gewichten einer Last
oder von Kräften

_____

A n s p r ü c h e :

1.) Vorrichtung zur Bestimmung von Gewichten einer Last (36)
oder von Kräften, mit einem Parallel-Führungskörper (11),

bestehend aus einem ortsfest mit der Standbasis (20)
der Vorrichtung verbundenen, ruhenden Steg (12)
und aus einem von dem zu messenden Gewicht (36)
bzw. der Kraft beaufschlagten beweglichen Steg (15)
und aus einem Paar von - in Schwerkraftrichtung
gesehen - im Höhenabstand (31) zueinander angeordneten, die beiden Stege (12, 15) verbindenden
Blattfedern (13, 14),

und mit einem an dem einen der beiden Stege (12)
sitzenden elastischen Übertragungsorgan (21),

das zur Kraftuntersetzung dient und nur einen bestimmten Teil (Teilgewicht-Pfeil 42) des Gewichts
(30 Gewicht-Pfeil) der zu messenden Last (36) oder
der Kraft auf ein Meßelement (50) überträgt,

d a d u r c h   g e k e n n z e i c h n e t ,

daß das Übertragungsorgan aus einem im Innenraum (17)
zwischen den Stegen (12, 15) und Blattfedern (13, 14)
des außen liegenden Parallel-Führungskörpers (Außenkörper 11) angeordneten weiteren Parallel-Führungskörper (Innenkörper 21) besteht,

umfassend ein an dem einen Steg (15) des Außenkörpers (11) angeordnetes Paar von zueinander im
Höhenabstand (22) liegenden inneren Blattfedern
(23, 24), zwischen dem ein weiterer beweglicher
Innensteg (25) verläuft,

und das Meßelement (50) an diesem Innensteg (25)
angreift.


2.) Vorrichtung nach Anspruch 1, dadurch gekennzeichnet,
daß der Innenkörper (21) am beweglichen Steg (15)
des Außenkörpers (11) sitzt.


3.) Vorrichtung nach Anspruch 1 oder 2, dadurch gekennzeichnet, daß der Innen- und Außenkörper (11, 21)
miteinander einstückig ausgebildet sind.


4.) Vorrichtung nach einem oder mehreren der Ansprüche
1 bis 3, dadurch gekennzeichnet,

daß das Meßelement (50) aus einer schwingenden Saite
(51) besteht

und die Saite (51) eine der Drehung des Innenstegs
(25) im Meßfall entgegengerichtete Neigungslage (45)
gegenüber einer Vertikalen (44) zur Standbasis (20)
aufweist.

5.) Vorrichtung nach einem oder mehreren der Ansprüche
   1 bis 4, dadurch gekennzeichnet,

   daß der Innensteg (25) mit einem den Innenkörper (21)
   annähernd in Verlaufsrichtung der inneren Blattfedern
   (23,24) verlängernden Arm (40) versehen ist

   und der Arm (40) am Meßelement (50) angreift.

6.) Vorrichtung nach Anspruch 5, dadurch gekennzeichnet,

   daß der Arm (40') über den insbesondere ruhenden Steg
   (12') des Außenkörpers (11') hinaus verlängert ist

   und das Meßelement (50') außerhalb des Außenkörpers
   (11') angeordnet ist, (Fig. 4 bis 6).

7.) Vorrichtung nach Anspruch 6, dadurch gekennzeichnet,
   daß der verlängerte Arm (40') einen Durchbruch (59)
   im Steg (12') des Außenkörpers (11') durchragt, (Fig.
   3 bis 7).

8.) Vorrichtung nach Anspruch 6, dadurch gekennzeichnet,
   daß der verlängerte Arm (40'') seitlich am Steg (12'')
   des Außenkörpers (11'') vorbeigeführt ist, (Fig. 8).

9.) Vorrichtung nach Anspruch 8, dadurch gekennzeichnet, daß der Steg (12'') mit wenigstens einer seitlichen Ausnehmung (71) zur Aufnahme des verlängerten Arms (40'') versehen ist.

10.) Vorrichtung nach einem oder mehreren der Ansprüche 5 bis 9, dadurch gekennzeichnet, daß der Arm (40), wenigstens bereichsweise (47), aus einem Werkstoff mit einem gegenüber dem Innenkörper (21) anderen Temperatur-Ausdehnungs-Koeffizienten besteht (Fig. 1, 2).

11.) Vorrichtung nach einem oder mehreren der Ansprüche 1 bis 10, dadurch gekennzeichnet,

daß der Innensteg (25) mit einer in den Freiraum (27) des Innenkörpers (21) hineinragenden Verbreiterung (26) versehen ist,

die im Abstand (29) zu den inneren Blattfedern (23,24) und dem Steg (15) des Außenkörpers (11) angeordnet ist, (Fig. 1).

12.) Vorrichtung nach Anspruch 11, dadurch gekennzeichnet, daß die Verbreiterung (26) zum Befestigen (48) einer Vorlastmasse (49) dient.

13.) Vorrichtung nach einem oder mehreren der Ansprüche 1 bis 12, dadurch gekennzeichnet,

daß die Stützstelle (54) des Meßelements (50), welche der am Innensteg (25) befindlichen Angriffsstelle (53) des Meßelements (50) gegenüberliegt, über ein im Abstand neben dem Meßelement verlaufendes Zwischenglied (56) mit der Standbasis (20) der Vorrichtung verbunden ist,

wobei das Zwischenglied (56) aus einem Werkstoff besteht, der einen die temperaturbedingte Dimensionsänderung des Meßelements (50) und des Innen- sowie Außenkörpers (11,21) kompensierenden Temperatur-Ausdehnungs-Koeffizienten aufweist, (Fig. 1, 2).

14.) Vorrichtung nach einem oder mehreren der Ansprüche 1 bis 13, dadurch gekennzeichnet,

daß der Innenkörper (21') für Vorrichtungs-Typen unterschiedlicher Untersetzung der zu messenden Gewichte oder Kräfte zwar gleich ausgebildet ist,

aber die Blattfedern (13',14') des Außenkörpers (11') typenweise zueinander unterschiedlich dimensioniert (69, 70) sind.

15.) Vorrichtung nach einem oder mehreren der Ansprüche 1 bis 14, dadurch gekennzeichnet,

daß die beiden im Außenkörper (11') befindlichen Blattfedern (13', 14') zueinander geneigt (67) verlaufen.

16.) Vorrichtung nach Anspruch 15, dadurch gekennzeichnet, daß der zwischen den beiden Blattfedern (13',14') liegende Höhenabstand im Bereich des beweglichen Stegs (15') größer als im Bereich des feststehenden Stegs (12') ausgebildet ist.

17.) Vorrichtung nach einem oder mehreren der Ansprüche 1 bis 16, dadurch gekennzeichnet,

daß die zum Außenkörper (11) gehörenden Blattfedern
(13,14) zwar im wesentlichen zueinander parallel
verlaufen,

aber eine zueinander unterschiedliche Länge (38)
besitzen.

18.) Vorrichtung nach einem oder mehreren der Ansprüche
1 bis 17, dadurch gekennzeichnet, daß ein als Tiefpaßfilter wirkendes mechanisches Dämpfungsglied (60)
zwischen dem Innen- und Außenkörper (11,21) angeordnet ist, (Fig. 1, 2).

19.) Vorrichtung nach Anspruch 18, dadurch gekennzeichnet,
daß das Dämpfungsglied (50') in einer Aussparung (64)
im insbesondere ruhenden Steg (12') des Außenkörpers
(11') angeordnet ist,(Fig. 3).

20.) Vorrichtung nach einem oder mehreren der Ansprüche
1 bis 19, dadurch gekennzeichnet, daß zwischen dem
beweglichen Steg (15) des Außenkörpers (11) und der
Standbasis (20) der Vorrichtung ein weiteres Dämpfungsglied (58) angeordnet ist, (Fig. 1).

21.) Vorrichtung nach einem oder mehreren der Ansprüche
1 bis 20, dadurch gekennzeichnet, daß der Innen- und/
oder Außenkörper (11,21) im Gußverfahren aus gießfähigem Werkstoff, wie Kunststoff oder Metall,
hergestellt sind.

FIG.1

FIG.2

FIG.5 FIG.6 FIG.4 FIG.3

Berkel

0248226

FIG. 8

FIG. 7

0248226

Berkel